# EUROPÄISCHE PATENTANMELDUNG

(11) **EP 2 262 345 A2**
(43) Veröffentlichungstag der Anmeldung: **15.12.2010**
(21) Anmeldenummer: 10005848.6
(22) Anmeldetag: 07.06.2010
(51) Int. Cl.: H04W 88/02

(54) **Funkübertragungsmodul zur mobilen Datenübertragung**

(30) Priorität: 08.06.2009 DE 202009008108 U
(71) Anmelder: Kalunka, Alfred, 89077 Ulm (DE)
(72) Erfinder: Kalunka, Alfred, 89077 Ulm (DE)
(74) Vertreter: Fiener, Josef

(57) **Zusammenfassung**

Zur Schaffung eines kostengünstigen Funkübertragungsmoduls (1) zur mobilen Datenübertragung, insbesondere in einem Frequenzbereich nahe 868 MHz (SRD-Band), wird die Kombination folgender drei Grundmodule vorgeschlagen:
- ein erstes als eine integrierte Schaltung ausgeführtes Modul (3), welches an einem Eingang (2) des Funkübertragungsmoduls (1) als elektrisches Signal seriell und/oder parallel anliegende, zu sendende Daten sendeseitig für die Funkübertragung aufbereitet;
- ein zweites als eine integrierte Schaltung ausgeführtes Modul (4), welches die aufbereiteten Daten verarbeitet und zur Funkübertragung als Hochfrequenzsignal ausgibt;
- ein drittes als Hochfrequenzstrahler- und Empfangsanordnung (6) ausgebildetes Modul, welches das ausgegebene Hochfrequenzsignal auf einen Funkübertragungskanal überträgt bzw. ein derartiges Hochfrequenzsignal von einem Funkübertragungskanal empfängt; wobei
- das zweite als integrierte Schaltung ausgeführte Modul (4) ein durch das dritte Modul (6) empfangenes Hochfrequenzsignal empfangsseitig vorverarbeitet und empfangene Daten aufbereitet; wobei
- das erste als integrierte Schaltung ausgeführte Modul (3) die aufbereiteten Daten verarbeitet, um diese an einem Ausgang (11) als elektrisches Signal zur Verfügung zu stellen.

## Beschreibung

Die Erfindung betrifft ein Funkübertragungsmodul zur mobilen Datenübertragung insbesondere in einem Frequenzbereich nahe 868 MHz entsprechend den oberbegrifflichen Merkmalen des Anspruches 1.

Im Bereich von Kurzstrecken-Funkübertragungsmodulen für den Datenfunk sind zahlreiche Systeme erhältlich, die bei direkter Sichtverbindung einwandfrei arbeiten. Defizite bei Geräten, die bei höheren Frequenzen, wie z.B. im allgemein freigegebenen SRD-Band bei 868-870 MHz, betrieben werden, machen sich jedoch oftmals im mobilen Einsatz bemerkbar, da bekannte Geräte zumeist für den stationären, z.B. Netzwerkbetrieb ausgelegt sind. Infolge einer Bewegung, wie sie im mobilen Einsatz bisweilen vorliegt, ändert sich mitunter der Funkkanal und eine Mehrwegeausbreitung muss berücksichtigt werden. Zudem erfahren die Funkübertragungsgeräte im mobilen Einsatz Störungen durch Geräte anderer Nutzer, so dass Kanalwechselstrategien erforderlich werden. Dazu sind die herkömmlichen Geräte jedoch nicht ausgelegt, da diese vorwiegend in Netzwerkumgebungen oder in Festinstallationen angewendet werden, wo obengenannte Einflüsse nur selten ins Gewicht fallen.

Daher liegt der Erfindung die Aufgabe zugrunde, ein kostengünstiges Funkübertragungsmodul, insbesondere für das SRD-Band nahe 868 MHz, zur Verfügung zu stellen, welches auch in einer mobilen Einsatzumgebung eine stabile Datenfunkübertragung gewährleistet.

Diese Aufgabe wird durch das Funkübertragungsmodul zur mobilen Datenübertragung nach Patentanspruch 1 gelöst.

Weitere vorteilhafte Ausgestaltungen der Erfindung sind in den abhängigen Ansprüchen angegeben.

Gemäß einer vorteilhaften Ausführungsform der Erfindung wird ein Funkübertragungsmodul zur mobilen Datenübertragung, insbesondere nahe 868 MHz (SRD-Band) vorgeschlagen, welches drei Grundmodule enthält:
- ein erstes als integrierte Schaltung ausgeführtes Modul, welches an einem Eingang des Funkübertragungsmoduls als elektrisches Signal seriell und/oder parallel anliegende, zu sendende Daten sendeseitig für die Funkübertragung aufbereitet;
- ein zweites als integrierte Schaltung ausgeführtes Modul, welches die aufbereiteten Daten verarbeitet und zur Funkübertragung als Hochfrequenzsignal ausgibt;
- ein drittes als Hochfrequenzstrahler- und Empfangsanordnung ausgebildetes Modul, welches das ausgegebene Hochfrequenzsignal auf einen Funkübertragungskanal überträgt bzw. ein derartiges Hochfrequenzsignal von einem Funkübertragungskanal empfängt; wobei
- das zweite als integrierte Schaltung ausgeführte Modul ein durch das dritte Modul empfangenes Hochfrequenzsignal empfangsseitig vorverarbeitet und empfangene Daten aufbereitet; wobei
- das erste als integrierte Schaltung ausgeführte Modul die aufbereiteten Daten verarbeitet, um diese an einem Ausgang als elektrisches Signal zur Verfügung zu stellen.

Bei einer weiteren vorteilhaften Ausführungsform der Erfindung ist ein Funkübertragungsmodul vorgesehen, welches eine Puffervorrichtung aufweist, in welcher die Daten vor dem Senden und/oder nach dem Empfang in dem zweiten als integrierte Schaltung ausgeführten Modul in einem Pufferspeicher abgelegt werden.

Weiterhin wird ein Funkübertragungsmodul vorgeschlagen, wobei das erste als integrierte Schaltung ausgeführte Modul so ausgebildet ist, dass als Analogwerte oder als Wert aus genormten Stromschleifen an den Eingang gelieferte Daten sendeseitig vorverarbeitet und aufbereitet werden.

Bei einer weiteren vorteilhaften Ausführungsform ist das erste als integrierte Schaltung ausgeführte Modul so ausgebildet, dass die verarbeiteten Daten seriell oder parallel am Ausgang zur Verfügung gestellt werden.

Gemäß noch einer weiteren vorteilhaften Ausführungsform ist das erste als integrierte Schaltung ausgeführte Modul so ausgebildet, dass die verarbeiteten Daten als Analogsignal oder als genormte Stromschnittstelle am Ausgang zur Verfügung gestellt werden.

Des Weiteren wird ein Funkübertragungsmodul vorgeschlagen, wobei das erste als integrierte Schaltung ausgeführte Modul eine Ablaufsteuerung für das Funkprotokoll und das Datenprotokoll sowie alle Adress- und Übertragungsparameter enthält.

Bei noch einer vorteilhaften Ausführungsform der Erfindung generiert das zweite als integrierte Schaltung ausgeführte Modul ein GFSK-moduliertes Signal.

Weiterhin ist das Funkübertragungsmodul vorteilhafterweise so ausgebildet, dass nur Daten gesendet werden, wenn der gewählte Übertragungskanal unbelegt ist.

Bei noch einer weiteren vorteilhaften Ausführungsform enthält das dritte als Hochfrequenzstrahler- und Empfangsanordnung ausgebildete Modul eine integrierte Antenne.

Gemäß einem Aspekt erfolgt das Übertragen der Daten über den Funkübertragungskanal sporadisch und/oder zeitlich begrenzt als burst transmission erfolgt.

Weitere Merkmale und Vorteile der Erfindung ergeben sich aus der nachfolgenden Beschreibung von Ausführungsbeispielen der Erfindung, anhand der Figur der Zeichnung, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

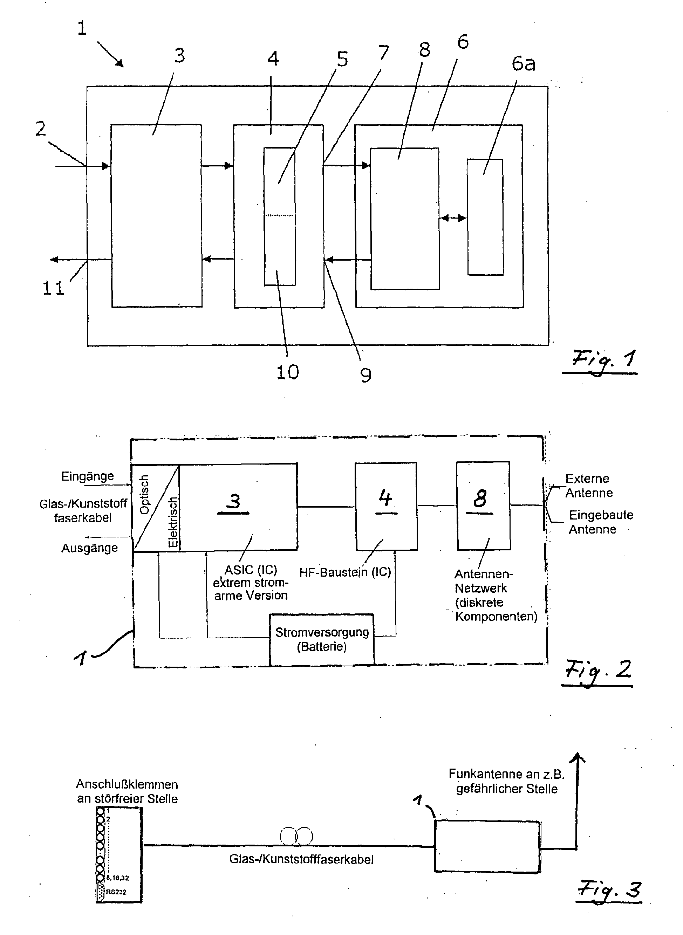

Bevorzugte Ausführungsformen der Erfindung werden nachfolgend anhand der beigefügten Zeichnungen näher erläutert. Hierbei zeigen Fig. 1 bis 3 schematisch Ausführungsformen eines Funkübertragungsmoduls gemäß der Erfindung.

In Fig. 1 ist schematisch ein erfindungsgemäßes Funkübertragungsmodul 1 dargestellt. Das erfindungsgemäße Funkübertragungsmodul 1 ist mobil einsetzbar und für den Datenfunk bzw. die mobile Datenübertragung im SRD-Band bei etwa 868 MHz vorgesehen. Das SRD-Band (SRD: Short Range Devices) ist allgemein Geräten mit kurzen Reichweiten zugewiesen. Das Funkübertragungsmodul 1 ist zum mobilen Datenfunk ausgebildet, womit mitumfasst ist, dass es sich für stationäre Anwendungen (örtlich begrenzte Punkt-zu-Punkt-Übertragungen, die keine örtliche Bewegung während des Betriebs zulassen bzw. benötigen) gleichermaßen eignet. Mobil einsetzbar bzw. mobile Datenübertragung soll im Rahmen der vorliegenden Erfindung bedeuten, dass eine Übertragung während der örtlichen Bewegung zugelassen und möglich ist, wie zum Beispiel bei Mobiltelephonen und professionellen Funkgeräten.

Das Funkübertragungsmodul 1 ist zur Datenübertragung ausgebildet, zum Beispiel zur Übertragung von Benutzerdaten wie Schaltzuständen, sich langsam verändernder Bilder, von Daten für Anzeigetafeln, von Sensoren in industrieller Umgebung, zur Fernsteuerung von Klimageräten, zur Datenübertragung im Automobil, bei Sport und Freizeit etc. Dabei ist das Funkübertragungsmodul 1 insbesondere dazu geeignet, Punkt-zu-Mehrpunkt-Netzwerkverbindungen durch gemeinsame Adressierung gleichartiger Geräte aufzubauen (broad cast).

Das Funkübertragungsmodul 1 weist einen Eingang 2 auf, welcher zur Aufnahme der zu übertragenden Information in Form gelieferter Daten, z.B. von angeschlossenen Sensoren, vorgesehen ist. Der Eingang 2 kann durch eine oder mehrere Schnittstellen geeigneter und bekannter Form zur Aufnahme der zu übertragenden Information gebildet sein und ist vorzugsweise in der Lage, auch Analogwerte, z.B. von Sensoren und Messgeräten aufzunehmen. Die Daten, die am Eingang in Form elektrischer Signale anliegen, können daneben als Datenwort, z.B. als gesamtes Datenwort mit z.B. 8, 16 oder 32 Bit gelesen werden oder im Fall seriell anliegender Daten seriell durch den Eingang 2 erfasst werden, wie zum Beispiel durch einen seriellen Port für RS232-Übertragung, wie dies in Fig. 3 an der linken Seite dargestellt ist. Bei einer besonders bevorzugten Ausführungsform können Werte aus genormten Stromschleifen bzw. Stromschnittstellen (z.B. 4 bis 20mA) erfasst werden. Denkbar ist, Werte von analogen als auch digitalen Stromschnittstellen, z.B. standardisiert nach DIN 66258, zu erfassen.

Fig. 2 zeigt die detaillierten Funktionsblöcke des Funkübertragungsmoduls 1 und Fig. 3 eine Übersicht zum Funkübertragungsmodul mit optischer Schnittstelle. Durch eine extrem stromsparende Version des ASICs 3 (vgl. auch nachfolgende Beschreibung zu Fig. 1) ist ein batterieschonender Betrieb möglich, d.h. ohne äußere Stromversorgung, da in einem z.B. hochspannungsgefährdeten Bereich (Blitzgefahr) auch keine Stromversorgungsleitung zum Funkübertragungsmodul 1 nötig ist, weil eine solche Leitung durch ihre Länge als Störspannungs-Antenne (Induktion) wirken und die Isolierung durch die Glasfaserverbindung (vgl. Fig. 3) zunichte machen könnte. Die Anschlußklemmen (8-, 16-, 32-polig und RS232), die auch einen optisch-elektrischen Wandler besitzen (vgl. Fig. 2, linke Seite), können dann in einem "sicheren" Raum untergebracht werden. Die Übertragungsgeschwindigkeit ist nach wie vor durch die zulässige Funk-Datenrate bestimmt und wird in keiner Weise durch die Glasfaser beeinträchtigt. Der HF-Baustein 4 ist eine von mehreren zur Zeit am Markt befindlichen universellen integrierten HF-Schaltungen für das ISM-Band, welche mit den gesamten Übertragungs- und Steuer-Parametern programmiert werden. Ein Initialisierungs-Datensatz vom ASIC 3 für den HF-Baustein 4 umfasst beispielsweise:
1. Sende- und Empfangs-Frequenzen
2. HF-Kanal-Auswahl
3. Sendeleistung
4. Datenrate
5. Modulationsart
6. Empfangskanal-Bandbreite
7. Pufferung der Daten und Puffersteuerung
8. Paket-Datenformat, Adressen für System-, Gruppe- und Einzelgerät
9. Einstellungen für FEC (Forward Error Control) oder ARQ (Automatic Request)
10. Einstellung der Datenverwürfelung zur gleichmäßigen Spektralbelegung
11. Aufbau der Telegrammstruktur (Preambel, Sync word, Adressen, Daten, CRC)

Im ASIC 3 sind somit alle vorgenannten, für die Steuerung des HF-Bausteins 4 nötigen Parameter gespeichert. Von dort werden Parameter, Daten und Kommandos über eine SPI-Schnittstelle an den HF-Baustein 4 übergeben.

Wie erwähnt ist auch vorgesehen, dass das Funkübertragungsmodul 1 vorteilhafterweise einen Fibre-Optic-Anschluss zum Anschluss einer Glasfaserleitung als Schnittstelle aufweist. Damit kann das Funkübertragungsmodul 1 an einem für den Funkempfang günstigen Ort platziert werden, selbst wenn es unter schwierigen Spannungsverhältnissen, z.B. Hochspannung, montiert wird. Mit der kostengünstigen Glas- oder z.B. Kunststofffaser kann der Datenstrom dann an einen Ort geführt werden, wo ein gefahrloses Anklemmen von Datenleitungen an den Eingang 2 möglich ist. Grundsätzlich kann das erfindungsgemäße Funkübertragungsmodul 1 alle Schnittstellentypen gleichzeitig verarbeiten.

Das am Eingang 2 anliegende, die Information liefernde Datensignal wird zur weiteren Aufbereitung einem ersten als eine integrierte Schaltung bzw. als IC ausgeführten Modul 3 zugeführt. Das erste Modul 3 ist vorzugsweise als anwendungsspezifische integrierte Schaltung (ASIC) ausgebildet, welche die gesamte Vorverarbeitung bzw. Aufbereitung der dem Eingang 2 zugeführten Daten übernimmt. Die Aufbereitung der Daten im ersten Modul 3 erstreckt sich insbesondere auf die Umwandlung von z.B. asynchron eingehenden, ungepackten Daten in synchrone, gepackte Daten. Diese können kompakt über Funk übertragen werden. Ferner werden die Daten im ersten Modul 3 z.B. durch einen Pseudo-Zufallsgenerator vorzugsweise verschlüsselt. Im ASIC, bzw. im ersten Modul 3 ist daneben z.B. die gesamte Ablaufsteuerung der Daten und der Protokolle des Funkübertragungsmoduls 1 (Datenprotokolle, Funkprotokolle), vorzugsweise in Form von Sequenzern, untergebracht. Im ersten Modul 3 sind ferner z.B. Parameter zur Steuerung eines zweiten Moduls 4 gespeichert, welche z.B. über eine SPI-Schnittstelle an das zweite Modul 4 in Form von Parametern, Daten und Kommandos übergeben werden können. Die Funktionalität des zweiten Moduls 4 wird untenstehend erläutert.

Das erste Modul 3 des Funkübertragungsmoduls 1 enthält zum Beispiel alle Adress- und Übertragungsparameter zum Aufbau einer Übertragungsverbindung zu einem z.B. weiteren erfindungsgemäßen Funkübertragungsmodul 1 bzw. einer Empfangsvorrichtung. Dazu können zum Beispiel die Parameter der Frequenz, der Sendeart, der Sendeleistung, der Modulationsart, der Übertragungsgeschwindigkeit, der Sendezeitbegrenzung, der Sendezykluszeit, der Prüfung auf Kanalverfügbarkeit, der Adressverwaltung, der Anzahl der Eingangs- und Ausgangsleitungen, der Formung des RS232-Signals, etc. in dem ersten als integrierte Schaltung ausgeführten Modul 3 hinterlegt sein und auf die via Eingang 2 empfangenen Daten angewendet werden, um diese zur Hochfrequenz-Übertragung sendeseitig geeignet und kompakt aufzubereiten.

Die zur Übertragung anstehenden sendeseitig derart vorverarbeiteten bzw. aufbereiteten Daten werden von einem zweiten als eine integrierte Schaltung ausgeführten Modul 4, z.B. einem (programmierbaren) HF-Baustein in Form eines ICs, zur Funkübertragung verarbeitet. Im Rahmen der Verarbeitung im zweiten Modul 4 werden die aufbereiteten Daten, z.B. im Rahmen einer Kanalkodierung, kodiert. Die kodierten Daten werden vorzugsweise in einen Pufferspeicher 5 übertragen und vorzugsweise mittels eines Fehlersicherungscodes für die mobile Funkübertragung erweitert. Bei einer Übertragung werden die im Pufferspeicher 5 zwischengespeicherten Daten aus dem Pufferspeicher 5 gelesen, so dass eine Übertragung mit konstanter Übertragungsgeschwindigkeit erfolgen kann. Dadurch werden Schwankungen der belegten Sendebandbreite und Verursachung von sporadischen Störungen von anderen Diensten sowie Übertragungsfehler vermieden.

Die verarbeiteten gepufferten Daten, welche vorzugsweise mit dem Fehlersicherungscode geschützt sind, werden anlässlich einer bevorstehenden Funkübertragung vom zweiten Modul 4 im Zuge einer Pulsformung bzw. Modulation als Hochfrequenzsignal ausgegeben. Die Pulsformung erfolgt vorzugsweise durch Frequenzmodulation bzw. vorliegend GFSK (Gaussian Frequency Shift Keying), wodurch die Spektralbreite begrenzt werden und ein Übersprechen erfolgreich verhindert werden kann. Folglich belegen die mit dem erfindungsgemäßen Funkübertragungsmodul übertragenen Daten nur eine geringe Bandbreite in einem Übertragungs- bzw. Funkkanal. Dadurch lassen sich Übertragungsgeschwindigkeiten von maximal 500kbps erzielen. Das erfindungsgemäße Funkübertragungsmodul 1 überträgt die Daten als Paketdaten, z.B. zyklisch für Messwerte oder spontan für Alarme.

Das zweite als integrierte Schaltung (IC) ausgeführte Modul 4 wird vorzugsweise vom ersten Modul 3 voreingestellt bzw. gesteuert, um die aufbereiteten Daten zu verarbeiten und ein Hochfrequenzsignal auszugeben. Dazu werden z.B. Initialisierungsdaten vom ersten Modul 4 an das zweite Modul 6 gesendet. Der Initialisierungsdatensatz umfasst beispielsweise Sende- und Empfangsfrequenzen, die HF-Kanal-Auswahl, die vorgesehene Sendeleistung, die Datenrate, die Modulationsart, die Empfangskanal-Bandbreite, die Pufferung der Daten und die Puffersteueurung, das Paket-Datenformat, Adressen für System-, Gruppe- und Einzeigeräte, Einstellungen für Fehlerkontrolle (FEC: Forward Error Control), Einstellungen zur Datenverwürfelung zur möglichst gleichmäßigen Spektralbelegung, Einstellungen der Telegrammstruktur (Preambel, Sync word, Adressen, Daten, CRC) etc. Mittels eines z.B. im zweiten Modul 4 untergebrachten einstellbaren Synthesizers wird unter Berücksichtigung oben genannter Parameter ein entsprechend moduliertes Signal von dem zweiten Modul 4 als HF-Signal ausgegeben.

Die derart verarbeiteten und als Hochfrequenzsignal ausgegebenen Daten werden mit einer Frequenz, die dem SRD-Band bei etwa 868 MHz zuordenbar ist, einem dritten als Hochfrequenz-Strahler- und Empfangsanordnung ausgeführten Modul 6 zugeführt. Dabei ist denkbar, dass das dritte Modul 6 als Antenne 6a ausgebildet ist und direkt mit einem Hochfrequenz (HF)-Ausgang 7 des zweiten Moduls 4 verbunden ist (vorzugsweise mit angepasster Impedanz) oder aber ein Anpassnetzwerk 8 zur Anpassung der Impedanz zusätzlich zu der Antenne 6a enthält, mittels welchem sie mit dem zweiten Modul 4 verbunden ist. Die Antenne 6a ist vorzugsweise eine integrierte Antenne, z.B. eine PCB-Antenne. Sie kann z.B. eine Antenne herkömmlicher Bauart mit diskreten Strahlern als λ/4-Antenne sein, welche in das Leiterbild einer Leiterkarte (gedruckte Schaltung) eingearbeitet ist. Das dritte Modul 6 überträgt die als Hochfrequenzsignal anliegenden Daten vom zweiten Modul 4 auf den Funkübertragungskanal bzw. empfängt Daten von einem solchen.

Ferner ist vorgesehen, dass das Funkübertragungsmodul 1 einen Anschluss für eine externe Antenne zur Verfügung stellt, z.B. in Form eines SMA-Ports oder eines Reverse Polarity SMA-Ports. Die externe Antenne wird über einen derartigen Port z.B. direkt mit dem zweiten Modul 4 oder indirekt über das dritte Modul 6, insbesondere ein Anpassnetzwerk, verbunden.

Das Funkübertragungsmodul 1 sendet bzw. überträgt Daten nur, wenn der gewählte Kanal frei ist. Zur Prüfung, ob der gewählte Kanal frei ist, wird ein Test durchgeführt und das Ergebnis bewertet. Diese Funktionalität wird durch z.B. das erste Modul 3 bereitgestellt, das eine Datenübertragung initiieren kann. Fällt das Ergebnis derart aus, dass der Übertragungskanal stets belegt ist, wird eine andere Übertragungsfrequenz bzw. ein anderer Übertragungskanal gewählt und der Sendeversuch erneuert. Das erfindungsgemäße Funkübertragungsmodul 1 enthält dazu eine Einrichtung, die sowohl sender- als auch empfangsseitig zu Frequency Hopping Spread Spectrum (FHSS) in der Lage ist. Dazu wird beispielsweise ein einstellbarer Synthesizer im HF-Baustein genutzt.

Im Empfangsfall wird ein im Übertragungskanal vorhandenes HF-Signal von dem dritten Modul, z.B. via integrierter oder externer Antenne mit/ohne Anpassnetzwerk empfangen. Das empfangene Signal, welches (Nutz-)Daten enthält, wird einem Eingang 9 des zweiten Moduls 4 zugeführt. Im zweiten Modul 4 wird das Signal empfangsseitig vorverarbeitet, z.B. mit den durch das erste Modul voreingestellten Parametervorgaben demoduliert und dekodiert, und dazu vorzugsweise in einen Empfangspuffer 10 geschrieben.

Der Empfangspuffer bzw. Pufferspeicher 10 dient zur empfangsseitigen Zwischenspeicherung des empfangenen, vorzuverarbeitenden Signals. Durch die Pufferung wird eine komplizierte Anpassung der eingehenden Daten beim Demodulieren vermieden und die Daten können an einem Ausgang mit einer beliebigen Geschwindigkeit zur Verfügung gestellt werden. Im Rahmen der Vorverarbeitung des Hochfrequenzsignals ist auch eine Prüfung dahingehend vorgesehen, ob die Daten von einer sich, z.B. durch die doppelte Adressprüfung, identifizierenden Stelle kommen. Ist dies nicht der Fall, werden die Daten zum Beispiel verworfen. In der Regel werden die Daten, welche von einem sich identifizierenden Absender stammen, in dem Empfangspufferspeicher 10 zwischengespeichert und anschließend im zweiten Modul 4 demoduliert, woraufhin dieselben aufbereitet sind.

Nach der Vorverarbeitung des empfangenen Hochfrequenzsignals werden die aufbereiteten Daten in Form gültiger Datenpakete durch das erste Modul 3 verarbeitet, z.B. entschlüsselt und zur Ausgabe geeignet geformt. Dazu können z.B. DA-Wandler etc. eingesetzt werden. Nach der Signalformung werden sie als elektrisches Signal in der gewählten auszugebenden Form als serielles (1-Bit) oder paralleles (8-Bit, 16-Bit oder 32-Bit) Signal, als Analogwert oder als genormte Stromschnittstelle (z.B. 4 bis 20mA) an einem Ausgang 11 des Funkübertragungsmoduls 1 zur Verfügung gestellt, wo sie zur Weiterverwendung durch Abnehmer abgegriffen werden können.

## Patentansprüche

1. Funkübertragungsmodul (1) zur mobilen Datenübertragung, insbesondere in einem Frequenzbereich nahe 868 MHz (SRD-Band),
enthaltend drei Grundmodule:
- ein erstes als eine integrierte Schaltung ausgeführtes Modul (3), welches an einem Eingang (2) des Funkübertragungsmoduls (1) als elektrisches Signal seriell und/oder parallel anliegende, zu sendende Daten sendeseitig für die Funkübertragung aufbereitet;
- ein zweites als eine integrierte Schaltung ausgeführtes Modul (4), welches die aufbereiteten Daten verarbeitet und zur Funkübertragung als Hochfrequenzsignal ausgibt;
- ein drittes als Hochfrequenzstrahler- und Empfangsanordnung (6) ausgebildetes Modul, welches das ausgegebene Hochfrequenzsignal auf einen Funkübertragungskanal überträgt bzw. ein derartiges Hochfrequenzsignal von einem Funkübertragungskanal empfängt; wobei
- das zweite als integrierte Schaltung ausgeführte Modul (4) ein durch das dritte Modul (6) empfangenes Hochfrequenzsignal empfangsseitig vorverarbeitet und empfangene Daten aufbereitet; wobei
- das erste als integrierte Schaltung ausgeführte Modul (3) die aufbereiteten Daten verarbeitet, um diese an einem Ausgang (11) als elektrisches Signal zur Verfügung zu stellen.

2. Funkübertragungsmodul (1) nach Anspruch 1, wobei eine Puffervorrichtung (5, 10) vorgesehen ist, in welcher die Daten vor dem Senden und/oder nach dem Empfang in dem zweiten als integrierte Schaltung ausgeführten Modul (4) in einem Pufferspeicher (5, 10) abgelegt werden.

3. Funkübertragungsmodul (1) nach einem der vorhergehenden Ansprüche, wobei das erste als integrierte Schaltung ausgeführte Modul (3) so ausgebildet ist, dass als Analogwerte oder als Wert aus genormten Stromschleifen an den Eingang (2) gelieferte Daten sendeseitig vorverarbeitet und aufbereitet werden.

4. Funkübertragungsmodul (1) nach einem der vorhergehenden Ansprüche, wobei das erste als integrierte Schaltung ausgeführte Modul (3) so ausgebildet ist, dass die verarbeiteten Daten seriell oder parallel am Ausgang (11) zur Verfügung gestellt werden.

5. Funkübertragungsmodul (1) nach einem der vorhergehenden Ansprüche, wobei das erste als integrierte Schaltung ausgeführte Modul (3) so ausgebildet ist, dass die verarbeiteten Daten als Analogsignal oder als genormte Stromschnittstelle am Ausgang (11) zur Verfügung gestellt werden.

6. Funkübertragungsmodul (1) nach einem der vorhergehenden Ansprüche, wobei das erste als integrierte Schaltung ausgeführte Modul (3) eine Ablaufsteuerung für das Funkprotokoll und das Datenprotokoll sowie alle Adress- und Übertragungsparameter enthält.

7. Funkübertragungsmodul (1) nach einem der vorhergehenden Ansprüche, wobei das zweite als integrierte Schaltung ausgeführte Modul (4) ein GFSK-moduliertes Signal generiert.

8. Funkübertragungsmodul (1) nach einem der vorhergehenden Ansprüche, wobei das Funkübertragungsmodul (1) so ausgebildet ist, dass nur Daten gesendet werden, wenn der gewählte Übertragungskanal unbelegt ist.

9. Funkübertragungsmodul (1) nach einem der vorhergehenden Ansprüche, wobei das dritte als Hochfrequenzstrahler- und Empfangsanordnung ausgebildete Modul (6) eine integrierte Antenne (6a) enthält.

10. Funkübertragungsmodul (1) nach einem der vorhergehenden Ansprüche, wobei das Übertragen der Daten über den Funkübertragungskanal sporadisch und/oder zeitlich begrenzt als burst transmission erfolgt.
